(19) Europäisches Patentamt / European Patent Office / Office européen des brevets

(11) **EP 3 558 719 B1**

(12) **FASCICULE DE BREVET EUROPEEN**

(45) Date de publication et mention de la délivrance du brevet:
**29.07.2020 Bulletin 2020/31**

(21) Numéro de dépôt: **17828966.6**

(22) Date de dépôt: **19.12.2017**

(51) Int Cl.:
**B60C 13/02** ^(2006.01)

(86) Numéro de dépôt international:
**PCT/FR2017/053674**

(87) Numéro de publication internationale:
**WO 2018/115700 (28.06.2018 Gazette 2018/26)**

(54) **PNEUMATIQUE AUX FLANCS RENFORCÉS RÉSISTANT AUX ATTAQUES CHIMIQUES**

REIFEN MIT CHEMISCH RESISTENTEN VERSTÄRKTEN SEITENWÄNDEN

TYRE WITH CHEMICALLY RESISTANT REINFORCED SIDEWALLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2016 FR 1662892**

(43) Date de publication de la demande:
**30.10.2019 Bulletin 2019/44**

(73) Titulaire: **Compagnie Générale des Etablissements Michelin**
**63000 Clermont-Ferrand (FR)**

(72) Inventeurs:
• **FERIGO, Hervé**
**63040 Clermont Ferrand Cedex 9 (FR)**
• **MERINO LOPEZ, José**
**63040 Clermont Ferrand Cedex 9 (FR)**
• **YOKOKAWA, Kazutaka**
**63040 Clermont Ferrand Cedex 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 287 017    WO-A1-2016/181928**

## Description

### DOMAINE DE L'INVENTION

L'invention se rapporte aux pneumatiques à carcasse radiale ou à carcasse croisée.

### ETAT DE LA TECHNIQUE

Les pneumatiques à carcasse radiale se sont progressivement imposés sur différents marchés, et notamment le marché des pneumatiques pour véhicules de tourisme. Ce succès est dû en particulier aux qualités d'endurance, de confort et de faible résistance au roulement de la technologie radiale.

Les principales parties d'un pneumatique sont la bande de roulement, les flancs et les bourrelets. Les bourrelets sont destinés à entrer en contact avec la jante. Dans un pneumatique de technologie radiale, chacune des principales parties constituant le pneumatique, à savoir la bande de roulement, les flancs et les bourrelets, a des fonctions bien séparées les unes des autres, et a par conséquent, une constitution spécifique bien connue.

Le pneumatique radial est essentiellement renforcé par une armature de carcasse comprenant au moins une nappe de carcasse présentant un angle sensiblement égal à 90° par rapport à la direction circonférentielle du pneumatique. Cette armature de carcasse est surmontée radialement à l'extérieur, et sous la bande de roulement, de nappes de renfort formant une ceinture.

Le pneumatique à carcasse croisée se distingue d'un pneumatique de technologie radial par la présence d'au moins deux nappes carcasse croisées dont l'angle est différent de 90° par rapport à la direction circonférentielle du pneumatique. Les nappes sont dites « croisées » parce que les angles sont de signes opposés d'une nappe à l'autre.

On rappelle que, selon l'invention, la direction circonférentielle du pneumatique est la direction comprise dans un plan perpendiculaire à l'axe de rotation du pneumatique et tangente au renforcement de ceinture du pneumatique.

Suite à l'apparition de pneumatique à carcasse radiale, certains pneumatiques à carcasse croisée ont également été pourvus d'un renforcement de ceinture sous la bande de roulement.

Dans ces deux types de pneumatique, la bande de roulement, en contact directement avec le sol, a notamment pour fonction d'assurer le contact avec la route et doit s'adapter à la forme du sol. Les flancs, quant à eux, absorbent les irrégularités du sol tout en transmettant les efforts mécaniques nécessaires pour porter la charge du véhicule et assurer son mouvement.

Le renforcement de ceinture est une armature qui doit, d'une part, être suffisamment rigide vis-à-vis des déformations sur chant afin que le pneumatique développe les poussées de dérive nécessaires à son guidage, et transmettre le couple moteur ou freineur, et d'autre part, être très souple en flexion, c'est-à-dire autoriser des variations de courbure de son plan pour assurer une surface de contact du pneumatique sur le sol suffisante.

Par conséquent, le renforcement de ceinture a généralement une structure composite, lui permettant de présenter la rigidité requise pour un poids relativement faible. Le renforcement de ceinture est généralement constitué d'au moins deux nappes présentant des angles différents, comprenant des renforts, en forme de câble, enrobés de caoutchouc. Les éléments de renfort sont croisés d'une nappe à l'autre par rapport à la direction circonférentielle.

Lors d'un choc avec un trottoir ou avec un nid de poule, le pneu peut être endommagé, en particulier en le coinçant entre la jante et l'obstacle. Suite au choc des éléments de renfort du flanc du pneumatique peuvent être endommagés ou cassés. Le pneumatique peut se déformer localement et/ou perdre sa pression de gonflage.

Pour pallier à cet inconvénient, il a été proposé plusieurs solutions différentes. Il a par exemple été proposé d'augmenter la force de rupture des câbles de la nappe carcasse, voire encore d'augmenter le nombre de couches de renforts, typiquement avec des solutions bi-nappe. Une autre solution consiste à disposer sur le flanc du pneumatique un ensemble de protubérances et de creux qui limitent la sollicitation des câbles lors de chocs. Les demandes internationales WO 2014/207093 et WO 2014/207094 publiées le 31 décembre 2014 décrivent des exemples de réalisation de pneumatiques intégrant des alternances de protubérances et creux sur les flancs pour augmenter la résistance de ces pneumatiques aux chocs latéraux.

Le document EP2287017 décrit une solution de pneumatique avec des éléments de renforcement prévus sur les flancs et un agencement permettant une évacuation de la chaleur afin d'augmenter la durabilité du pneumatique. Le document WO 2016/181928 décrit un pneumatique avec des éléments de renforcement prévus sur les flancs selon un agencement permettant une portance et une résistance à l'air réduites.

Outre ces attaques physiques qui viennent endommager les pneumatiques, il existe également d'autres d'attaques de type chimique cette fois, comme par exemple par l'action de l'ozone, qui peuvent également dégrader les pneumatiques.

Les attaques dites chimiques, notamment à l'ozone, peuvent en particulier venir endommager les protubérances formées sur les flancs du pneumatique, et ainsi dégrader leur rôle protecteur contre les chocs mécaniques.

L'action de l'ozone sur le pneumatique vient en effet favoriser l'apparition de fissures sur les protubérances, ces fissures peuvent se propager rapidement dans la protubérance.

Il existe un besoin de disposer d'un pneu robuste, en particulier sur le flanc, résistant à la fois aux attaques physiques, comme des chocs latéraux ou des chocs avec des obstacles tels que des trottoirs ou nids de poule, et à des attaques chimiques, dues à l'action de l'ozone par exemple, pendant la durée de vie du pneu en service.

Un but de la présente invention est en particulier de proposer un pneumatique présentant une résistance accrue contre les chocs au niveau des flancs et pour lequel l'action de l'ozone ne vient pas diminuer cette résistance.

Encore un but de la présente invention est de proposer un pneumatique résistant aux attaques chimiques, notamment à l'ozone, au niveau des flancs renforcés dudit pneumatique, sans nécessiter de modification de la composition du matériau formant le pneumatique.

EXPOSE DE L'INVENTION

A cette fin, on propose un pneumatique pour ensemble roulant comprenant une jante et un pneumatique, ledit pneumatique comportant au moins une armature de carcasse surmontée radialement à l'extérieur d'une armature de sommet, elle-même radialement à l'intérieur d'une bande de roulement ayant deux extrémités axialement les plus extérieures, ladite armature de sommet étant constituée d'au moins une couche d'éléments de renforcement, ladite bande de roulement étant reliée à deux bourrelets par l'intermédiaire de deux flancs, lesdits bourrelets étant destinés à entrer en contact avec une jante ayant des hauts de crochet de jante, chaque bourrelet comportant au moins un élément de renforcement circonférentiel,

lesdits flancs comportant, sur leur surface extérieure, une série de protubérances alternées avec des creux, les protubérances étant disposées à la surface du flanc de manière régulière ou irrégulière,

dans lequel chaque protubérance s'étend de manière continue au moins entre un point A et un point D, où :

- ledit point A correspond au point limite de la bande de roulement positionné à une extrémité axialement la plus extérieure qui ne touche pas le sol lorsque le pneumatique est écrasé dans des conditions de charge et pression nominale ;
- ledit point D est positionné sur le flanc à un rayon Rd tel que Rd = Rc - 0.2*(Ra-Rc), où Ra correspond au rayon au niveau du point A et Rc correspond au rayon au niveau d'un point C, le point C étant positionné au niveau du flanc où la distance entre les deux flancs du pneumatique est la plus grande lorsque le pneumatique est gonflé ;

et où chaque protubérance comprend au moins une découpe positionnée entre le point A et le point D, la au moins une découpe étant formée transversalement par rapport à la protubérance au niveau d'une zone où la contrainte d'extension du matériau de ladite protubérance est maximale en conditions de charge et pression nominale.

Des aspects préférés mais non limitatifs de ce pneumatique, pris seuls ou en combinaison, sont les suivants :

- chaque protubérance comprend au moins une découpe positionnée dans une zone (Zp) s'étendant à plus ou moins 15 mm d'un point P, ledit point P correspondant au plus petit rayon de courbure du pneumatique dans les conditions de charge et de pression nominale.
- chaque protubérance comprend au moins une découpe positionnée dans une zone (Zf) s'étendant à plus ou moins 15 mm d'un point F, ledit point F correspondant au point du flanc le plus axialement à l'extérieur et à l'intersection entre couches en élastomère différentes formant le flanc.
- la profondeur (p) de la découpe est fonction de la hauteur (H) de la protubérance dans laquelle la découpe est formée, la profondeur (p) ayant une valeur comprise entre six dixième de la valeur de la hauteur (H) et la valeur de la hauteur (H), de préférence entre huit dixième de la valeur de la hauteur (H) et la valeur de la hauteur (H).
- la largeur (e) de la découpe a une valeur strictement inférieure à 5 mm, de préférence strictement inférieure à 3.5 mm, et de préférence encore strictement inférieure à 1.5 mm.
- la découpe a une section transversale présentant une portion droite de largeur (e) et s'étendant à partir de la surface dudit flanc, et une portion circulaire s'étendant à partir de la portion droite.
- la portion circulaire a un rayon (r) ayant une valeur strictement supérieure à la moitié de la valeur de la largeur (e), et de préférence une valeur strictement supérieure au deux tiers de la valeur de la largeur (e).
- la portion circulaire a un rayon (r) ayant une valeur strictement supérieure à 0.5 mm, de préférence strictement supérieure à 1 mm, et de préférence encore strictement supérieure à 1.3 mm.
- la découpe est formée selon une direction de coupe (Dc) faisant avec la direction longitudinale ($D_L$) de la protubérance un angle $\alpha$ ayant une valeur comprise entre 45° et 135°, de préférence une valeur de l'ordre de 90°.
- la découpe est formée selon une direction sensiblement circonférentielle.
- chaque protubérance comprend un ensemble de plusieurs découpes positionnées au moins entre le point A et le point D, les découpes étant sensiblement parallèles entre elles et chaque découpe étant formée transversalement par rapport à la protubérance.
- chaque protubérance comprend un ensemble de plusieurs découpes positionnées entre un point B et le point C, où le point B est positionné sur le flanc à un rayon Rb tel que Rb = Ra - 0.2*(Ra-Rc), les découpes étant sensiblement parallèles entre elles et chaque découpe étant formée transversalement par rapport à la protubérance.
- les découpes de l'ensemble sont espacées d'un pas (Ps) ayant une valeur strictement supérieure à 5 mm.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 représente de manière schématique la coupe d'un pneumatique selon un plan radial ;
- la figure 2 représente de manière schématique un agencement de plusieurs protubérances d'un même flanc de pneumatique ;
- la figure 3 représente de manière schématique une vue de côté d'une protubérance formée dans flanc de pneumatique avec un agencement d'incisions selon un premier mode de réalisation ;
- la figure 4 représente de manière schématique une vue de côté d'une protubérance formée dans flanc de pneumatique avec un agencement d'incisions selon un deuxième mode de réalisation.

DESCRIPTION DETAILLEE DE L'INVENTION

Dans ce document, on entend par « surface de roulement » l'ensemble des points de la bande de roulement d'un pneumatique qui sont susceptibles d'entrer en contact avec le sol lorsque le pneumatique roule.

Dans l'emploi du terme « radial » il convient de distinguer plusieurs utilisations différentes du mot par la personne du métier.

Premièrement, l'expression se réfère à un rayon du pneumatique. Une « direction radiale » est une direction coupant l'axe de rotation du pneumatique et perpendiculaire à celui-ci. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également. Par ailleurs, on qualifie de rayon Rx d'un point X du pneumatique la distance radiale entre l'axe de rotation dudit pneumatique et le point X.

En revanche, un fil ou une armature est dit « radial » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique. Un « plan radial ou méridien » est un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8.

Le « plan médian ou plan équatorial » du pneumatique est le plan qui est perpendiculaire à l'axe de rotation du pneumatique et qui se situe à équidistance des structures annulaires de renforcement de chaque bourrelet. Ce plan divise le pneumatique en deux moitiés sensiblement égales, c'est-à-dire qui passe par le milieu de la bande de roulement.

Une « direction circonférentielle » est une direction qui est perpendiculaire à la fois à un rayon du pneumatique et à la direction axiale. Cela correspond à la direction de roulement du pneumatique.

Une « coupe circonférentielle » ou « section circonférentielle » est respectivement une coupe ou une section selon un plan perpendiculaire à l'axe de rotation du pneumatique. Un « plan circonférentiel » est un plan perpendiculaire à l'axe de rotation du pneumatique.

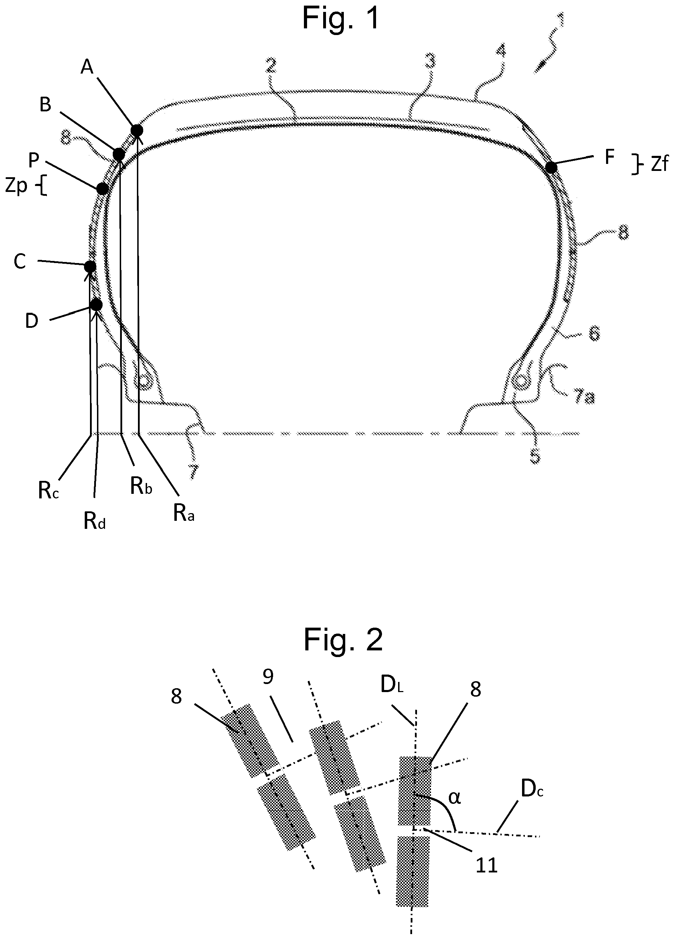

A la figure 1 est représentée la coupe d'un pneumatique 1 selon un plan radial.

De manière classique, le pneumatique 1 comprend au moins une armature de carcasse 2 surmontée radialement à l'extérieur d'une armature de sommet 3, elle-même radialement à l'intérieur d'une bande de roulement 4 ayant deux extrémités axialement les plus extérieures.

L'armature de sommet 3 est constituée d'au moins une couche d'éléments de renforcement, et généralement de plusieurs couches de renforcement.

La bande de roulement 4 est reliée à deux bourrelets 5 par l'intermédiaire de deux flancs 6.

Les bourrelets 5 sont destinés à entrer en contact avec une jante 7 ayant des hauts de crochet de jante 7a. Chaque bourrelet 5 comprend de préférence au moins un élément de renforcement circonférentiel.

Afin de renforcer le pneumatique 1 et éviter notamment que les éléments de renfort des flancs ne soient endommagés ou cassés par des chocs latéraux ou par des chocs avec des obstacles (trottoirs ou nids de poule par exemple), les flancs 6 comportent, sur leur surface extérieure, une série de protubérances 8 alternées avec des creux 9, les protubérances 8 étant disposées à la surface du flanc 6 de manière régulière ou irrégulière.

Chaque protubérance 8 a une forme sensiblement longitudinale et s'étend selon une longueur de fibre neutre, de manière continue ou discontinue. Par fibre neutre, on entend un axe neutre qui passe sensiblement au centre du volume de chaque protubérance 8, et qui ne subit ni raccourcissement ni allongement lorsqu'il est soumis à une compression et/ou à une dépression.

Sur la figure 1 on peut voir une protubérance 8, en coupe, s'étendant en continue le long de la fibre neutre.

Comme illustré à la figure 1, chaque protubérance 8 s'étend de manière continue au moins entre un point A et un point D, où :

- le point A correspond au point limite de la bande de roulement 4 positionné à une extrémité axialement la plus extérieure qui ne touche pas le sol lorsque le pneumatique est écrasé dans des conditions de charge et pression nominale ;
- le point D est positionné sur le flanc 6 à un rayon Rd tel que :

$$Rd = Rc - 0.2*(Ra-Rc)$$

où Ra correspond au rayon au niveau du point A ; et Rc correspond au rayon au niveau d'un point C, le point C étant positionné au niveau du flanc 6 où la distance entre les deux flancs 6 du pneumatique est la plus grande lorsque le pneumatique est gonflé. Le point C correspond à la zone du flanc communément appelée « équateur ».

Il est à noter que les protubérances 8 peuvent s'étendre au-delà de la zone comprise entre le point A et le point D tels que définis ci-dessus.

Afin de limiter l'apparition et la propagation de fissures dues aux attaques chimiques, comme par l'action de l'ozone, chaque protubérance 8 comprend au moins une découpe 11 positionnée entre le point A et le point D.

La découpe 11 est formée transversalement par rapport à la protubérance 8, c'est-à-dire qu'elle vient couper la protubérance 8 dans une direction transverse à la fibre neutre, c'est-à-dire une direction non parallèle à la fibre neutre.

De préférence, chaque protubérance 8 comprend une ou plusieurs découpes positionnées au niveau d'une zone où la contrainte d'extension du matériau de ladite protubérance 8 est maximale en conditions de charge et pression nominale. La zone du flanc du pneumatique la plus sollicitée se trouve notamment dans la zone entre le point C correspondant à l'équateur et le point A qui est sensiblement au bord de la bande de roulement.

Ainsi, il est préféré que la protubérance 8 comprenne au moins une découpe 11 positionnée dans une zone Zp s'étendant à plus ou moins 15 mm d'un point P, ledit point P correspondant au plus petit rayon de courbure du pneumatique dans les conditions de charge et de pression nominale. On parle ici du rayon de courbure du flanc dans le plan radial passant par le centre de l'aire de contact du pneumatique écrasé dans les conditions de charge et de pression nominale. Selon un exemple préféré, la zone Zp s'étendant à plus ou moins 10 mm du point P, et de préférence encore à plus ou moins 5 mm du point P.

Il est possible que le flanc soit constitué de plusieurs couches en différents matériaux élastomère. De manière alternative ou additionnelle, une protubérance 8 peut avoir au moins une découpe 11 positionnée dans une zone Zf s'étendant à plus ou moins 15 mm d'un point F, ledit point F correspondant au point du flanc 6 le plus axialement à l'extérieur et à l'intersection de deux couches en élastomère différentes formant le flanc. Selon un exemple préféré, la zone Zf s'étendant à plus ou moins 10 mm du point F, et de préférence encore à plus ou moins 5 mm du point F.

Comme indiqué plus haut, chaque découpe 11 est transversale par rapport à la fibre neutre de la protubérance 8, c'est-à-dire par rapport à la direction longitudinale $D_L$ de la protubérance 8.

De manière préférée, chaque découpe 11 est formée selon une direction de coupe Dc faisant avec la direction longitudinale $D_L$ de la protubérance 8 un angle $\alpha$ ayant une valeur comprise entre 45° et 135°, de préférence de l'ordre de 90°.

Dans l'exemple particulier représenté à la figure 2, les protubérances 8 sont inclinées les unes par rapport aux autres, c'est-à-dire qu'elles ne sont pas parallèles entre elles. Toutefois, chaque découpe 11 forme un angle $\alpha$ de 90° avec la protubérance 8 dans laquelle elle a été formée.

Selon un mode de réalisation particulier, les découpes 11 formées dans les différentes protubérances 8 forment une ligne de découpe globale sensiblement circonférentielle.

Les découpes 11 prévues dans chaque protubérance 8 ont une profondeur p qui est fonction de la hauteur H de la protubérance 8 dans laquelle la découpe est formée.

La profondeur p a de préférence une valeur comprise entre six dixième de la valeur de la hauteur H et la valeur de la hauteur H, soit :

$$0.6H \leq p \leq H$$

De préférence encore, la profondeur p de la découpe 11 a une valeur comprise entre huit dixième de la valeur de la hauteur H et la valeur de la hauteur H, soit :

$$0.8H \leq p \leq H$$

La largeur e de la découpe 11 a une valeur strictement inférieure à 5 mm. De préférence la largeur e est strictement inférieure à 3.5 mm, et de préférence encore strictement inférieure à 1.5 mm.

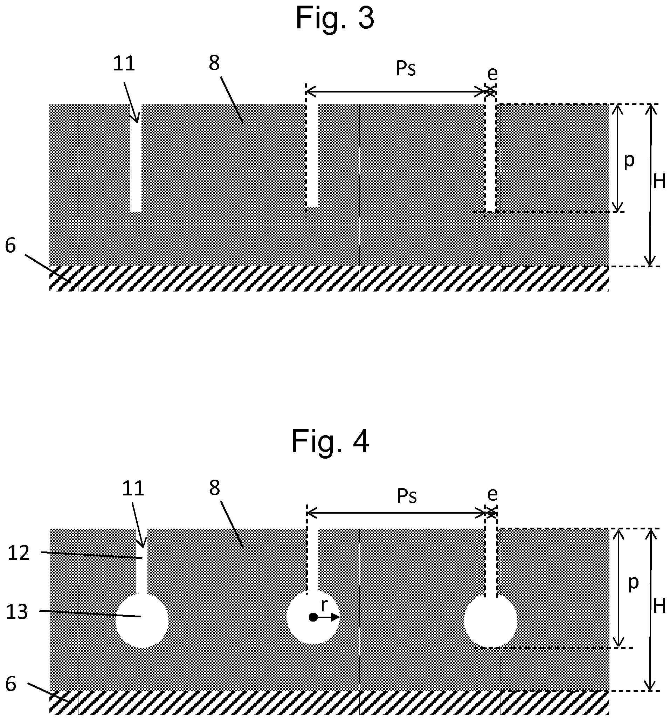

Selon l'exemple présenté à la figure 3, chaque découpe 11 a une forme simple, allongée, c'est-à-dire que la découpe 11 a une section transversale présentant une unique portion droite.

Sur l'exemple de la figure 3, la portion droite présente une extrémité à angles droits, mais on pourrait envisager de faire une découpe 11 avec une portion droite ayant une extrémité arrondie, cela permettant une meilleure absorption des contraintes de roulage.

De préférence encore, pour minimiser les contraintes de roulage au niveau du fond des découpes 11, on prévoit des découpes avec un profil tel qu'illustré à la figure 4.

Sur cet exemple, chaque découpe 11 a une section transversale présentant une première portion droite 12 de largeur e et s'étendant à partir de la surface de la protubérance 8. Cette première portion droite 12 se prolonge vers le fond de la découpe par une deuxième portion 13, sensiblement circulaire.

La portion circulaire 13 de découpe 11 de la figure 4 a de préférence un rayon r ayant une valeur strictement supérieure à la moitié de la valeur de la largeur e $\left(r \geq \frac{1}{2}e\right)$, et de préférence une valeur strictement supérieure au deux tiers de la valeur de la largeur e $\left(r > \frac{2}{3}e\right)$.

Le rayon r de cette deuxième portion circulaire 13 a de préférence une valeur strictement supérieure à 0.5 mm, de préférence strictement supérieure à 1 mm, et de préférence encore strictement supérieure à 1.3 mm.

Comme présenté plus haut, chaque protubérance 8 comprend au moins une découpe 11 positionnée dans la zone Zf autour du point F et/ou dans la zone Zp autour du point P.

Une protubérance 8 peut également comprendre plusieurs découpes 11 un ensemble 10 de plusieurs découpes 11 qui sont positionnées entre le point A et le point D de la fibre neutre de la protubérance.

De préférence, les découpes 11 d'une même protubérance 8 sont formées sensiblement parallèles entre elles, chaque découpe 11 étant formée transversalement par rapport à la protubérance 8 comme cela a été décrit précédemment en référence à la figure 2.

De manière préférée, les découpes 11 formées dans une même protubérance 8 sont positionnées entre un point B et le point C, où le point B est positionné sur le flanc 6 à un rayon Rb tel que :

$$Rb = Ra - 0.2*(Ra-Rc)$$

De préférence, les découpes 11 d'une même protubérance 8 sont espacées régulièrement d'un pas (Ps) ayant une valeur strictement supérieure à 5 mm.

REFERENCES BIBLIOGRAPHIQUES

- WO 2014/207093
- WO 2014/207094

**Revendications**

1. Pneumatique pour ensemble roulant comprenant une jante et un pneumatique, ledit pneumatique comportant au moins une armature de carcasse (2) surmontée radialement à l'extérieur d'une armature de sommet (3), elle-même radialement à l'intérieur d'une bande de roulement (4) ayant deux extrémités axialement les plus extérieures, ladite armature de sommet (3) étant constituée d'au moins une couche d'éléments de renforcement, ladite bande de roulement (4) étant reliée à deux bourrelets (5) par l'intermédiaire de deux flancs (6), lesdits bourrelets (5) étant destinés à entrer en contact avec une jante (7) ayant des hauts de crochet de jante (7b), chaque bourrelet (5) comportant au moins un élément de renforcement circonférentiel,

   lesdits flancs (6) comportant, sur leur surface extérieure, une série de protubérances (8) alternées avec des creux (9), les protubérances (8) étant disposées à la surface du flanc (6) de manière régulière ou irrégulière,

   **caractérisé en ce que** chaque protubérance (8) s'étend de manière continue au moins entre un point A et un point D, où :

       - ledit point A correspond au point limite de la bande de roulement (4) positionné à une extrémité axialement la plus extérieure qui ne touche pas le sol lorsque le pneumatique est écrasé dans des conditions de charge et pression nominale ;
       - ledit point D est positionné sur le flanc (6) à un rayon Rd tel que Rd = Rc - 0.2*(Ra-Rc), où Ra correspond au rayon au niveau du point A et Rc correspond au rayon au niveau d'un point C, le point C étant positionné au niveau du flanc (6) où la distance entre les deux flancs (6) du pneumatique est la plus grande lorsque le pneumatique est gonflé ;

   et **en ce que** chaque protubérance (8) comprend au moins une découpe (11) positionnée entre le point A et le point D, la au moins une découpe (11) étant formée transversalement par rapport à la protubérance (8) au niveau d'une zone où la contrainte d'extension du matériau de ladite protubérance (8) est maximale en conditions de charge et pression nominale.

2. Pneumatique selon la revendication 1, dans lequel chaque protubérance (8) comprend au moins une découpe (11) positionnée dans une zone (Zp) s'étendant à plus ou moins 15 mm d'un point P, ledit point P correspondant au plus petit rayon de courbure du pneumatique dans les conditions de charge et de pression nominale.

3. Pneumatique selon l'une quelconque des revendications 1 ou 2, dans lequel chaque protubérance (8) comprend au moins une découpe (11) positionnée dans une zone (Zf) s'étendant à plus ou moins 15 mm d'un point F, ledit point F correspondant au point du flanc (6) le plus axialement à l'extérieur et à l'intersection entre couches en élastomère différentes formant le flanc.

4. Pneumatique selon l'une quelconque des revendications 1 à 3, dans lequel la profondeur (p) de la découpe (11) est fonction de la hauteur (H) de la protubérance (8) dans laquelle la découpe est formée, la profondeur (p) ayant une valeur comprise entre six dixième de la valeur de la hauteur (H) et la valeur de la hauteur (H), de préférence entre huit dixième de la valeur de la hauteur (H) et la valeur de la hauteur (H).

5. Pneumatique selon l'une quelconque des revendications 1 à 4, dans lequel la largeur (e) de la découpe (11) a une valeur strictement inférieure à 5 mm, de préférence strictement inférieure à 3.5 mm, et de préférence encore strictement inférieure à 1.5 mm.

6. Pneumatique selon l'une quelconque des revendications 1 à 5, dans lequel la découpe (11) a une section transversale présentant une portion droite (12) de largeur (e) et s'étendant à partir de la surface dudit flanc (6), et une portion circulaire (13) s'étendant à partir de la portion droite (12).

7. Pneumatique selon la revendication 6, dans lequel ladite portion circulaire (13) a un rayon (r) ayant une valeur strictement supérieure à la moitié de la valeur de la largeur (e), et de préférence une valeur strictement supérieure au deux tiers de la valeur de la largeur (e).

8. Pneumatique selon l'une quelconque des revendications 6 ou 7, dans lequel ladite portion circulaire (13) a un rayon (r) ayant une valeur strictement supérieure à 0.5 mm, de préférence strictement supérieure à 1 mm, et de préférence encore strictement supérieure à 1.3 mm.

9. Pneumatique selon l'une quelconque des revendications 1 à 8, dans lequel la découpe (11) est formée selon une direction de coupe (Dc) faisant avec la direction longitudinale ($D_L$) de la protubérance un angle $\alpha$ ayant une valeur comprise entre 45° et 135°, de préférence une valeur de l'ordre de 90°.

10. Pneumatique selon l'une quelconque des revendications 1 à 9, dans lequel la découpe (11) est formée selon une direction sensiblement circonférentielle.

11. Pneumatique selon l'une quelconque des revendications 1 à 10, dans lequel chaque protubérance (8) comprend un ensemble (10) de plusieurs découpes (11) positionnées au moins entre le point A et le point D, les découpes (11) étant sensiblement parallèles entre elles et chaque découpe (11) étant formée transversalement par rapport à la protubérance (8).

12. Pneumatique selon l'une quelconque des revendications 1 à 10, dans lequel chaque protubérance (8) comprend un ensemble (10) de plusieurs découpes (11) positionnées entre un point B et le point C, où le point B est positionné sur le flanc (6) à un rayon Rb tel que Rb = Ra - 0.2*(Ra-Rc), les découpes (11) étant sensiblement parallèles entre elles et chaque découpe (11) étant formée transversalement par rapport à la protubérance (8).

13. Pneumatique selon l'une quelconque des revendications 11 ou 12, dans lequel les découpes (11) de l'ensemble (10) sont espacées d'un pas (Ps) ayant une valeur strictement supérieure à 5 mm.

**Patentansprüche**

1. Luftreifen für eine fahrbare Einheit, die eine Felge und einen Luftreifen enthält, wobei der Luftreifen mindestens eine Karkassenbewehrung (2) aufweist, die radial außen von einer Scheitelbewehrung (3) überlagert wird, die sich selbst radial innerhalb eines Laufstreifens (4) befindet, der zwei axial äußerste Enden hat, wobei die Scheitelbewehrung (3) aus mindestens einer Schicht von Verstärkungselementen besteht, wobei der Laufstreifen (4) über zwei Flanken (6) mit zwei Wülsten (5) verbunden ist, wobei die Wülste (5) dazu bestimmt sind, mit einer Felge (7) in Kontakt zu kommen, die Felgenhaken-Oberkanten (7b) hat, wobei jeder Wulst (5) mindestens ein Umfangsverstärkungselement aufweist, wobei die Flanken (6) an ihrer Außenfläche eine Reihe von mit Vertiefungen (9) abwechselnden Ausstülpungen (8) aufweisen, wobei die Ausstülpungen (8) regelmäßig oder unregelmäßig auf der Fläche der Flanke (6) angeordnet sind,

**dadurch gekennzeichnet, dass** jede Ausstülpung (8) sich kontinuierlich mindestens zwischen einem Punkt A und einem Punkt D erstreckt, wobei:

- der Punkt A dem Grenzpunkt des Laufstreifens (4) entspricht, der an einem axial am weitesten außen liegenden Ende positioniert ist, das nicht den Boden berührt, wenn der Luftreifen unter Last- und Nenndruckbedingungen gequetscht wird;
- der Punkt D auf der Flanke (6) an einem Radius Rd derart, dass gilt Rd = Rc - 0,2*(Ra-Rc), positioniert ist, wobei Ra dem Radius im Bereich des Punkts A entspricht, und Rc dem Radius im Bereich eines Punkts C entspricht, wobei der Punkt C in dem Bereich der Flanke (6) positioniert ist, in dem der Abstand zwischen den zwei Flanken (6) des Luftreifens am größten ist, wenn der Luftreifen aufgepumpt ist;

und dass jede Ausstülpung (8) mindestens einen Ausschnitt (11) enthält, der zwischen dem Punkt A und dem Punkt D positioniert ist, wobei der mindestens eine Ausschnitt (11) quer bezüglich der Ausstülpung (8) im Bereich einer Zone geformt ist, in der die Dehnungsbeanspruchung des Materials der Ausstülpung (8) unter Last- und Nenndruckbedingungen maximal ist.

2. Luftreifen nach Anspruch 1, wobei jede Ausstülpung (8) mindestens einen Ausschnitt (11) enthält, der in einer Zone (Zp) positioniert ist, die sich mehr oder weniger als 15 mm von einem Punkt P erstreckt, wobei der Punkt P dem kleinsten Krümmungsradius des Luftreifens unter Last- und Nenndruckbedingungen entspricht.

3. Luftreifen nach einem der Ansprüche 1 oder 2, wobei jede Ausstülpung (8) mindestens einen Ausschnitt (11) enthält, der in einer Zone (Zf) positioniert ist, die sich mehr oder weniger als 15 mm von einem Punkt F erstreckt, wobei der Punkt F dem Punkt der Flanke (6) entspricht, der axial am weitesten außen und an der Schnittstelle zwischen unterschiedlichen Elastomerschichten liegt, die die Flanke bilden.

4. Luftreifen nach einem der Ansprüche 1 bis 3, wobei die Tiefe (p) des Ausschnitts (11) von der Höhe (H) der Ausstülpung (8) abhängt, in der der Ausschnitt geformt ist, wobei die Tiefe (p) einen Wert hat, der zwischen sechs Zehntel des Werts der Höhe (H) und dem Wert der Höhe (H) liegt, vorzugsweise zwischen acht Zehntel des Werts der Höhe (H) und dem Wert der Höhe (H).

5. Luftreifen nach einem der Ansprüche 1 bis 4, wobei die Breite (e) des Ausschnitts (11) einen Wert strikt niedriger als 5 mm hat, vorzugsweise strikt niedriger als 3,5 mm, und noch vorzugsweise strikt niedriger als 1,5 mm.

6. Luftreifen nach einem der Ansprüche 1 bis 5, wobei der Ausschnitt (11) einen Querschnitt hat, der einen geraden Abschnitt (12) einer Breite (e) und sich ausgehend von der Fläche der Flanke (6) erstreckend und einen kreisförmigen Abschnitt (13) aufweist, der sich ausgehend vom geraden Abschnitt (12) erstreckt.

7. Luftreifen nach Anspruch 6, wobei der kreisförmige Abschnitt (13) einen Radius (r) hat, der einen Wert strikt größer als die Hälfte des Werts der Breite (e), und vorzugsweise einen Wert strikt größer als Zweidrittel des Werts der Breite (e) hat.

8. Luftreifen nach einem der Ansprüche 6 oder 7, wobei der kreisförmige Abschnitt (13) einen Radius (r) hat, der einen Wert strikt höher als 0,5 mm, vorzugsweise strikt höher als 1 mm, und noch vorzugsweise strikt höher als 1,3 mm hat.

9. Luftreifen nach einem der Ansprüche 1 bis 8, wobei der Ausschnitt (11) gemäß einer Schnittrichtung ($D_C$) geformt ist, die mit der Längsrichtung ($D_L$) der Ausstülpung einen Winkel $\alpha$ bildet, der einen Wert zwischen 45° und 135°, vorzugsweise einen Wert in der Größenordnung von 90° hat.

10. Luftreifen nach einem der Ansprüche 1 bis 9, wobei der Ausschnitt (11) im Wesentlichen entlang einer Umfangsrichtung geformt ist.

11. Luftreifen nach einem der Ansprüche 1 bis 10, wobei jede Ausstülpung (8) eine Einheit (10) von mehreren Ausschnitten (11) enthält, die mindestens zwischen dem Punkt A und dem Punkt D positioniert sind, wobei die Ausschnitte (11) im Wesentlichen parallel zueinander sind und jeder Ausschnitt (11) quer bezüglich der Ausstülpung (8) geformt ist.

12. Luftreifen nach einem der Ansprüche 1 bis 10, wobei jede Ausstülpung (8) eine Einheit (10) von mehreren Ausschnitten (11) enthält, die zwischen einem Punkt B und dem Punkt C positioniert sind, wobei der Punkt B auf der Flanke (6) an einem Radius Rb derart, dass gilt Rb = Ra - 0,2*(Ra-Rc), positioniert ist, wobei die Ausschnitte (11) im Wesentlichen parallel zueinander sind und jeder Ausschnitt (11) quer bezüglich der Ausstülpung (8) geformt ist.

13. Luftreifen nach einem der Ansprüche 11 oder 12, wobei die Ausschnitte (11) der Einheit (10) um einen Zwischenraum ($P_S$) beabstandet sind, der einen Wert strikt größer als 5 mm hat.

## Claims

1. Tyre for a rolling assembly comprising a rim and a tyre, said tyre having at least one carcass reinforcement (2) surmounted radially on the outside by a crown reinforcement (3), itself radially on the inside of a tread (4) having two axially outermost ends, said crown reinforcement (3) being made up of at least one layer of reinforcing elements, said tread (4) being connected to two beads (5) by way of two sidewalls (6), said beads (5) being intended to come into contact with a rim (7) having rim flange tops (7b), each bead (5) having at least one circumferential reinforcing element,

   said sidewalls (6) having, on their outer surface, a set of protuberances (8) alternating with voids (9), the protuberances (8) being disposed at the surface of the sidewall (6) in a regular or irregular manner, **characterized in that** each protuberance (8) extends continuously at least between a point A and a point D, where:

   - said point A corresponds to the limit point of the tread (4) positioned at an axially outermost end that does not touch the ground when the tyre is compressed under nominal load and pressure conditions;
   - said point D is positioned on the sidewall (6) at a radius Rd such that Rd = Rc - 0.2*(Ra-Rc), where Ra corresponds to the radius at the point A and Rc corresponds to the radius at a point C, the point C being positioned on the sidewall (6) where the distance between the two sidewalls (6) of the tyre is greatest when the tyre is inflated;

   and **in that** each protuberance (8) comprises at least one cut (11) positioned between the point A and the point D, the at least one cut (11) being formed transversely with respect to the protuberance (8) in a region where the extension stress of the material of said protuberance (8) is at a maximum under nominal load and pressure conditions.

2. Tyre according to Claim 1, wherein each protuberance (8) comprises at least one cut (11) positioned in a region (Zp) extending more or less 15 mm from a point P, said point P corresponding to the smallest radius of curvature of the tyre under nominal load and pressure conditions.

3. Tyre according to either one of Claims 1 and 2, wherein each protuberance (8) comprises at least one cut (11) positioned in a region (Zf) extending more or less 15 mm from a point F, said point F corresponding to the axially outermost point of the sidewall (6) at the intersection between different layers of elastomer forming the sidewall.

4. Tyre according to any one of Claims 1 to 3, wherein the depth (p) of the cut (11) depends on the height (H) of the protuberance (8) in which the cut is formed, the depth (p) having a value of between six tenths of the value of the height (H) and the value of the height (H), preferably between eight tenths of the value of the height (H) and the value of the height (H).

5. Tyre according to any one of Claims 1 to 4, wherein the width (e) of the cut (11) has a value strictly less than 5 mm, preferably strictly less than 3.5 mm, and more preferably strictly less than 1.5 mm.

6. Tyre according to any one of Claims 1 to 5, wherein the cut (11) has a cross section having a straight portion (12) of width (e) and extending from the surface of said sidewall (6), and a circular portion (13) extending from the straight portion (12).

7. Tyre according to Claim 6, wherein said circular portion (13) has a radius (r) having a value strictly greater than half the value of the width (e), and preferably a value strictly greater than two thirds of the value of the width (e).

8. Tyre according to either one of Claims 6 and 7, wherein said circular portion (13) has a radius (r) having a value strictly greater than 0.5 mm, preferably strictly greater than 1 mm, and more preferably strictly greater than 1.3 mm.

9. Tyre according to any one of Claims 1 to 8, wherein the cut (11) is formed in a cutting direction (Dc) that makes an angle α having a value of between 45° and 135°, preferably a value of around 90°, with the longitudinal direction ($D_L$) of the protuberance.

10. Tyre according to any one of Claims 1 to 9, wherein the cut (11) is formed in a substantially circumferential direction.

11. Tyre according to any one of Claims 1 to 10, wherein each protuberance (8) comprises a set (10) of several cuts (11) positioned at least between the point A and the point D, the cuts (11) being substantially mutually parallel and each cut (11) being formed transversely with respect to the protuberance (8).

12. Tyre according to any one of Claims 1 to 10, wherein each protuberance (8) comprises a set (10) of several cuts (11) positioned between a point B and the point C, where the point B is positioned on the sidewall (6) at a radius Rb such that Rb = Ra - 0.2*(Ra-Rc), the cuts (11) being substantially mutually parallel and each cut (11) being formed transversely with respect to the protuberance (8).

13. Tyre according to either one of Claims 11 and 12, wherein the cuts (11) of the set (10) are spaced apart at a spacing (Ps) having a value strictly greater than 5 mm.

# Fig. 1

# Fig. 2

## Fig. 3

## Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014207093 A
- WO 2014207094 A
- EP 2287017 A
- WO 2016181928 A